(19) Europäisches Patentamt / European Patent Office / Office européen des brevets

(11) **EP 3 274 746 B1**

(12) **EUROPEAN PATENT SPECIFICATION**

(45) Date of publication and mention
of the grant of the patent:
**13.11.2019 Bulletin 2019/46**

(21) Application number: **15804984.1**

(22) Date of filing: **07.05.2015**

(51) Int Cl.:
**G02B 6/14** *(2006.01)*     **G02B 6/028** *(2006.01)*

(86) International application number:
**PCT/RU2015/000292**

(87) International publication number:
**WO 2016/178595 (10.11.2016 Gazette 2016/45)**

(54) **GRADED INDEX WAVEGUIDE OPTICAL COUPLER**

OPTISCHER WELLENLEITERKOPPLER MIT GRADIENTENINDEX

COUPLEUR OPTIQUE À GUIDE D'ONDES À GRADIENT D'INDICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.01.2018 Bulletin 2018/05**

(73) Proprietor: **HUAWEI TECHNOLOGIES CO., LTD.
Guangdong 518129 (CN)**

(72) Inventor: **PETROV, Nikolay Ivanovich
Guangdong 518129 (CN)**

(74) Representative: **Gill Jennings & Every LLP
The Broadgate Tower
20 Primrose Street
London EC2A 2ES (GB)**

(56) References cited:
**US-A1- 2005 265 653     US-B1- 7 340 138**

**Description**

TECHNICAL FIELD

The present disclosure relates to an optical coupler for coupling modulated light guided by a first optical waveguide into multiple modes of a second optical waveguide, an optical fiber data transmission system with reduced modal noise using such optical coupler, a method for reducing modal noise in an optical fiber data transmission system and to a method for transmitting a first data signal transported by a first optical waveguide to a second data signal transported by a second optical waveguide. The disclosure further relates to data transmission in Local Area Networks such as Radio over multimode Fiber and Ethernet over Fiber where the perfect alignment between different graded-index fibers is achieved by using an optical coupler.

BACKGROUND

Multi-Mode Fibers (MMF) are widely used for data transmission in local and storage area networks (LANs) as well as in high-speed in-house networks and (super) computer interconnects. Radio over fiber (RoF) systems using MMFs and plastic optical fibers (POFs) have received much attention for use in high-speed wireless communication, since they can simplify remote antenna stations in high-capacity optical fiber-based feeder networks. When these fibers are used in RoF systems modal noise is a serious problem. It causes signal distortion because of misalignment at fiber connections. This distortion appears as unwanted amplitude modulation in the received signal because of the mode-selective loss at the connectors. To reduce modal noise, it is important to minimize misalignment between connections at the laser outputs and the fiber connections.

Modal noise appears as random fluctuations of the received light intensity, and can have an important impact on the characteristics of the received signal also in the cases when short MMF lengths are considered. Modal noise comes as a consequence of time variations of the speckle pattern at the output plane of the MMF. One of the causes of modal noise is given by the variation in time of quantities such as environmental temperature or mechanical fiber stress, which determines the fluctuation of the optical phase differences among the modes guided by the MMF.

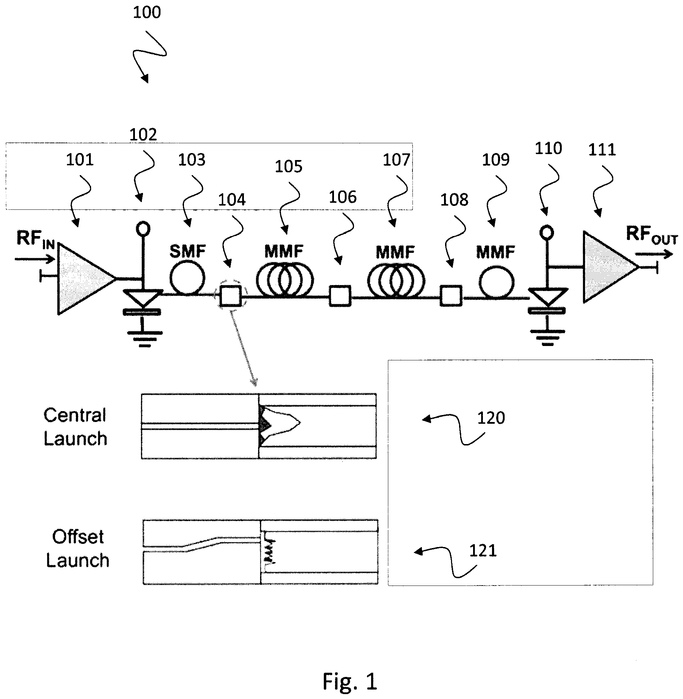

In RoF systems used for the distribution of wireless signals up to 2700 MHz, it is common to use an intensity-modulated direct-detection (IM-DD) system, where a distributed feedback (DFB) laser diode (LD) 102 is directly modulated by the radio signals $RF_{IN}$ (driven by an input amplifier 101), and the received optical power $RF_{OUT}$ (driven by an output amplifier 111) is directly detected by a photo-receiver 110. The same approach has been proved to be successful when applied to MMF systems 100, e.g. as illustrated in Fig. 1 where the light path includes a single mode fiber SMF 103 coupled to a plurality of multi-mode fibers MMF 105, 107, 109 by respective optical couplers 104, 106, 108. However, when employing a coherent LD 102 emitting in a single longitudinal mode together with MMF, the main problem limiting the system becomes modal noise. It causes signal distortion because of misalignment, e.g. central launch 120 or offset launch 121 at fiber connections.

US 7,340,138 relates to optical fiber devices and methods for interconnecting dissimilar fibers. US 2005/0265653 relates to apparatus, system and method for an adiabatic coupler for multi-mode fiber-optic transmission systems.

SUMMARY

It is the object of the invention to provide a concept for reducing modal noise in multi-mode fiber systems.

This object is achieved by the features of the independent claims. Further implementation forms are apparent from the dependent claims, the description and the figures.

The invention is based on the finding that modal noise reduction in fiber optic systems can be realized based on mode profiles matching by using a coupler between two different optical fibers. A significant reduction of modal noise can be achieved if the coupler with a gradient parameter defined from the condition for perfect alignment of modes of the first and second fibers is used.

In order to describe the invention in detail, the following terms, abbreviations and notations will be used:

MMF:    multi-mode fiber.
SMF:    single-mode fiber
POF:    plastic optical fiber.
RoF:    Radio over fiber.
BER:    Bit Error Rate.
LAN:    Local Area Network.
DFB:    Distributed Feedback.
LD:     Laser Diode.

According to a first aspect, there is provided an optical coupler connectable between a first optical waveguide and a second optical waveguide for coupling modulated light guided by the first optical waveguide into multiple modes of the second optical waveguide, the optical coupler comprising: a graded-index waveguide comprising a core material orientated with respect to an optical axis of the optical coupler, the core material having a refractive index decreasing with increasing distance from the optical axis of the optical coupler, wherein a refractive index profile of the core material is designed in accordance to an optimality criterion with respect to conversion of the modulated light of the first waveguide into the multiple modes of the second waveguide, such that an energy coupling between modes of the first optical waveguide and the second optical waveguide which modes have different indices is eliminated.

Such refractive index profile provides the following advantages: high coupling efficiency, low transmission loss, low modal noise, high data security, higher data rate transmission, lower bit error rate, elimination of modal noise at connection of control of the number of launched modes, and there is no need in additional electronic system to create a dither signal.

In a first possible implementation form of the optical coupler according to the first aspect, the refractive index profile of the core material is designed to provide a predetermined coupling efficiency for the coupling of the modulated light of the first waveguide into the multiple modes of the second waveguide.

Providing a predetermined coupling efficiency for the coupling of the modulated light of the first waveguide into the multiple modes of the second waveguide results in the following advantages that are greater coupling efficiency and low transmission losses; low bit error rate transmission; sensitivity of output signal to the axis displacement decreases significantly if the coupler with matched parameters is used: this indicates that low cost connectors can be used in fiber links; and low cost alignment between optical fibers and light sources.

The refractive index profile of the core material is designed to provide perfect mode matching of the modulated light of the first waveguide into the multiple modes of the second waveguide.

Such a perfect mode matching indicates that there is no energy coupling between the modes of the first and second waveguides with different indices. Such a coupler allows minimizing the modal noise in RoF system due to the perfect matching between two different fibers.

The second optical waveguide is a multi-mode graded index fiber; and the first optical waveguide is one of the following: a multi-mode graded index fiber, a single-mode fiber, a laser diode.

Such an optical coupler can be advantageously implemented between different types of optical waveguides, e.g. for coupling a SMF or a laser diode to an MMF fiber. The optical coupler reduces modal dispersion of the coupling point.

The first optical waveguide has a first gradient parameter and the second optical waveguide is a multi-mode graded index fiber having a second gradient parameter; and a gradient parameter of the refractive index profile corresponds to a geometric mean of the first gradient parameter of the first optical waveguide and the second gradient parameter of the second optical waveguide, in particular according to the relation: $\omega_0 = \sqrt{\omega_- \omega_+}$, where $\omega_0$ denotes the gradient parameter of the refractive index profile, $\omega_-$ denotes the first gradient parameter of the first optical waveguide and $\omega_+$ denotes the second gradient parameter of the second optical waveguide.

Such a relation provides an optimal reduction of modal noise in the coupling between two multimode fibers of different gradient parameters $\omega_-$ and $\omega_+$.

A length of the graded-index waveguide depends on the gradient parameter of the refractive index profile, in particular according to the relation:

$$L = \frac{\pi}{2} \frac{n_0}{\omega_0} (2p+1), \quad p = 0,1,2,\dots,$$

where $\omega_0$ is the gradient parameter of the refractive index profile and $n_0$ is a refractive index on the optical axis.

Such a relation specifies a length of the optical coupler for an optimal reduction of modal noise.

The first optical waveguide may be a single-mode graded index fiber and the modulated light guided by the first optical waveguide is a fundamental mode.

The optical coupler can be advantageously applied with single-mode fibers that are often used in high-precision scientific research because the allowance of only one propagation mode of the light makes the light easier to focus properly.

In an alternative development of the optical coupler, the first optical waveguide is a laser diode comprising a light beam source of a beam width according to $w_0 = 1/\sqrt{k\omega_-}$, where $k = 2\pi/\lambda$ is the wavenumber and $\lambda$ is the wavelength.

The optical coupler can be advantageously applied with laser diodes allowing total incident power of the laser diode to be launched into the MMF fiber.

In an alternative development of the optical coupler, a gradient parameter of the refractive index profile depends on a longitudinal coordinate of the graded-index waveguide.

Such gradient parameter allows a predicted coupling efficiency between the fibers, i.e. a parametric excitation of the modes.

In an alternative development of the optical coupler, a predictable coupling efficiency for the coupling of the modulated light of the first waveguide into the multiple modes of the second waveguide is achieved by the gradient parameter of the refractive index profile designed according to: $\omega^2(z) = \omega_-^2 \{1 + 2a\sin(2+b)\omega_- z / n_0\};$ $|a|, |b| <<$ 1, where $\omega_-$ is the gradient parameter of the first waveguide, $z$ is a length of the graded-index waveguide and $n_0$ is a refractive index on the optical axis.

Such a design allows to achieve a different degree of the mode mixing in the optical coupler which will cause the reduction of modal noise in the output of the second fiber.

In an alternative development of the optical coupler, a reflection coefficient $R$ between the first optical waveguide and the second optical waveguide is predictable, in particular according to the relations:

$$R = a^2 sh^2 \mu\omega_- z /(4\mu^2 + a^2 sh^2 \mu\omega_- z) \quad if \, |a| > |b|, \quad \mu = 0.5\sqrt{|a^2 - b^2|}$$

and

$$R = a^2 \sin^2 \mu\omega_- z /(4\mu^2 + a^2 \sin^2 \mu\omega_- z) \quad if \, |a| < |b|,$$

wherein $\omega_-$ is the gradient parameter of the first waveguide and $z$ is a length of the graded-index waveguide.

Such predictable reflection coefficient allows to design the reflection coefficient. By choosing different values of the reflection coefficient, a different degree of the mode mixing in the optical coupler can be achieved which will cause the reduction of modal noise in the output of the second fiber.

In an alternative development of the optical coupler, a predictable coupling efficiency for the coupling of the modulated light of the first waveguide into the multiple modes of the second waveguide is achieved by the gradient parameter of the refractive index profile designed according to: $\omega^2(z) = \omega_-^2 + c_1 /(ch^2 c_2 z)$, where $\omega_-$ is the gradient parameter of the first waveguide and $z$ is a length of the graded-index waveguide.

Such predictable coupling efficiency provides reduction of modal noise in the output of the second fiber.

According to a second aspect, there is provided an optical fiber data transmission system with reduced modal noise, comprising: a light source, launching modulated light into a first optical fiber; an optical coupler according to any one of claims 1 to 2, the optical coupler placed between the first optical fiber and a second optical fiber, wherein modulated light launched into the first optical fiber is converted into modes of the second optical fiber; and an optical detector for detecting modulated light propagated through the second optical fiber.

Such an optical coupler can be advantageously implemented in an optical fiber data transmission system, e.g. for data transmission in Local Area Networks, e.g. Radio over multimode Fiber and Ethernet over Fiber where the perfect alignment between multimode graded-index fibers is achieved using the coupler, resulting in lower bit error rate (BER), higher data rate transmission and longer link distances. Additional advantages are low modal noise and data security.

Such a perfect mode matching indicates that there is no energy coupling between the modes of the first and second waveguides with different indices. Such a coupler allows minimizing the modal noise in RoF system due to the perfect matching between two different fibers.

According to a third aspect, there is provided a method for transmitting a first data signal transported by a first optical waveguide to a second data signal transported by a second optical waveguide, the method comprising: providing the first data signal in the first optical waveguide, wherein the first data signal is based on launched modulated light in the first optical waveguide; transmitting the first data signal in the first optical waveguide to a second data signal in the second optical waveguide by coupling the modulated light of the first optical waveguide into multiple modes of the second optical waveguide via an optical coupler, wherein the optical coupler comprises: a graded-index waveguide comprising a core material orientated with respect to an optical axis of the optical coupler, the core material having a refractive index decreasing with increasing distance from the optical axis of the optical coupler, wherein a refractive index profile of the core material is designed in accordance to an optimality criterion with respect to conversion of the modulated light of the first waveguide into the multiple modes of the second waveguide, such that an energy coupling between modes of the first optical waveguide and the second optical waveguide which modes have different indices is eliminated.

Using such method provides the following advantages: high coupling efficiency, low transmission loss, low modal noise, high data security, higher data rate transmission, lower bit error rate, elimination of modal noise at connection of control of the number of launched modes, and there is no need in additional electronic system to create a dither signal.

## BRIEF DESCRIPTION OF THE DRAWINGS

Further embodiments of the invention will be described with respect to the following figures, in which:

Fig. 1 shows a schematic diagram illustrating a Radio over multimode fiber system 100;

Fig. 2 shows a schematic diagram illustrating an optical coupler 200 between a SMF or MMF waveguide and an MMF waveguide according to an implementation form;

Fig. 3 shows an exemplary performance diagram illustrating noise as a function of lateral offset between laser source and fiber axis;

Fig. 4a shows a schematic diagram illustrating a displaced coupling point between an SMF or LD waveguide and an MMF waveguide;

Fig. 4b shows an exemplary diagram illustrating noise over a displacement length for the displaced coupling point depicted in Fig. 4a;

Fig. 4c shows a schematic diagram illustrating a displaced coupling point between an SMF waveguide and an MMF waveguide by using an optical coupler according to an implementation form;

Fig. 4d shows an exemplary diagram illustrating noise over a displacement length for the displaced coupling point depicted in Fig. 4c;

Fig. 5 shows a schematic diagram illustrating an optical coupler 500 between a first MMF waveguide and a second MMF waveguide according to an implementation form;

Fig. 6 shows a schematic diagram illustrating an optical coupler 600 between an SMF waveguide and an MMF waveguide according to an implementation form;

Fig. 7 shows a schematic diagram illustrating an optical coupler 700 between a laser diode and an MMF waveguide according to an implementation form;

Fig. 8 shows a schematic diagram illustrating an optical coupler 800 between a first MMF waveguide and a second MMF waveguide, wherein a gradient parameter of the coupler 800 depends on a longitudinal coordinate according to an implementation form;

Fig. 9 shows a schematic diagram illustrating a multimode fiber optic link 900 according to an implementation form; and

Fig. 10 shows a schematic diagram illustrating a method 1000 for transmitting a first data signal transported by a first optical waveguide to a second data signal transported by a second optical waveguide according to an implementation form.

## DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

Optical couplers according to the disclosure may be used to couple optical waveguides. An optical waveguide is a physical structure that guides electromagnetic waves in the optical spectrum. Common types of optical waveguides include optical fiber waveguides. Optical waveguides are used as components in integrated optical circuits or as the transmission medium in local and long haul optical communication systems.

Optical couplers according to the disclosure may couple single mode optical fibers and multi-mode optical fibers. A single-mode optical fiber (SMF) is an optical fiber designed to carry light only directly down the fiber - the transverse mode. Modes define the way the wave travels through space, i.e. how the wave is distributed in space. Waves can have the same mode but have different frequencies. This is the case in single-mode fibers, where waves with different frequencies, but of the same mode can occur, which means that they are distributed in space in the same way, resulting in a single ray of light. Although the ray travels parallel to the length of the fiber, it is often called transverse mode since its electromagnetic radiation vibrations occur perpendicular (transverse) to the length of the fiber. The main difference between multi-mode and single mode optical fiber is that the former has a much larger core diameter, typically 50-100 micrometers; much larger than the wavelength of the light carried in it. Because of the large core and also the possibility of large numerical aperture, the multi-mode fiber has a higher "light-gathering" capacity than the single-mode fiber. However, compared to single-mode fibers, the multi-mode fiber limit is lower. Because multi-mode fiber has a larger core-size than single-mode fiber, it supports more than one transverse mode; hence it is limited by modal dispersion, while single mode is not.

Optical couplers according to the disclosure may include graded-index fibers. A gradient-index fiber is an optical fiber whose core has a refractive index that decreases with increasing radial distance from the optical axis of the fiber.

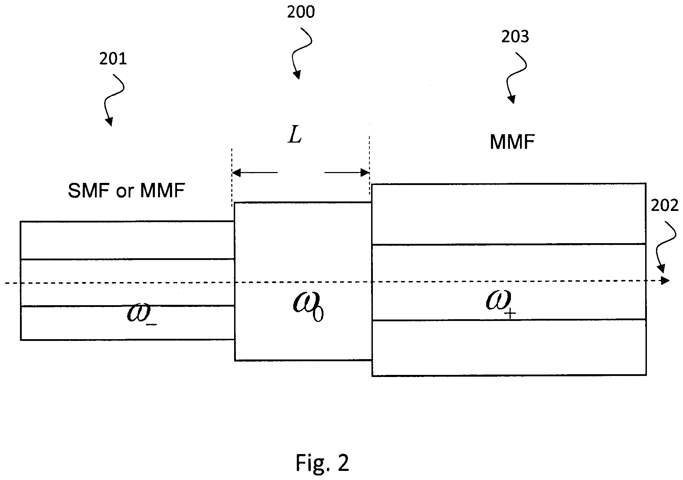

Fig. 2 shows a schematic diagram illustrating an optical coupler 200 between a first waveguide 201, e.g. an SMF or MMF waveguide and a second waveguide 203, e.g. an MMF waveguide according to an implementation form.

The optical coupler 200 is connectable between the first optical waveguide 201 and the second optical waveguide 203 for coupling modulated light guided by the first optical waveguide 201 into multiple modes of the second optical waveguide 203. The optical coupler 200 includes a graded-index waveguide including a core material orientated with respect to an optical axis 202 of the optical coupler 200. The core material has a refractive index decreasing with increasing distance from the optical axis of the optical coupler 200. A refractive index profile of the core material is designed in accordance to an optimality criterion with respect to conversion of the modulated light of the first waveguide 201 into the multiple modes of the second waveguide 203, such that an energy coupling between modes of the first optical waveguide 201 and the second optical waveguide 203 which modes have different indices is eliminated, e.g. as described below.

The optimality criterion may be designed such that an amount of energy coupled from the modulated light of the first optical waveguide into the multiple modes of the second optical waveguide is above a threshold, e.g. a predetermined or a designed threshold.

The refractive index profile of the core material may be designed to provide a predetermined coupling efficiency for the coupling of the modulated light of the first waveguide 201 into the multiple modes of the second waveguide 203. The refractive index profile of the core material may be designed to provide perfect mode matching of the modulated light of the first waveguide 201 into the multiple modes of the second waveguide 203.

The optical coupler 200 depicted in Fig. 2 may be connected between a first optical waveguide 201 such as a multi-mode graded index fiber, a single-mode fiber or a laser diode and a second optical waveguide 203 such as a multi-mode graded index fiber.

The optical coupler 200 provides a modal noise reduction due to its special design. A significant reduction of modal noise can be achieved if a coupler 200 with the gradient parameter $\omega_0$ defined from the condition for perfect alignment of modes of the first and second fibers is used as described in the following.

The refractive index distribution in transverse direction in graded-index fibers is described by $n^2 = n_0^2 - \omega^2 r^2$, where $n_0$ is the refractive index on the axis 202 of the fiber and $\omega$ is the gradient parameter.

Modal noise caused by the imperfect connections between different fibers and light sources may be characterized by the ratio of average power in an output fiber to its variance, and it may be determined as a signal-to-noise ratio (SNR) by the following way:

$$(1) \qquad \frac{S}{N} = \frac{\bar{\eta}}{\sigma(\eta)},$$

$$\sigma(\eta) = \left( \left\langle \eta^2 \right\rangle - \left\langle \eta \right\rangle^2 \right)^{1/2}$$

where $\eta = P_{II}/P_I$ is the coupling efficiency between the waveguides and $P_I$ and $P_{II}$ are the powers in the first and second waveguides 201, 203, accordingly.

The coupling efficiency is given by

$$(2) \qquad \eta = \frac{1}{\sum_m^N |a_m|^2} \int d\Omega G(\Omega) e^{-i\Omega\tau} \sum_m^N \sum_n^N \langle a_m a_n^* \rangle_s e^{i[\varphi_{mn} - \tau_{mn}(\Omega - \Omega_0)]} F_{mn} \ ,$$

$$F_{mn} = \sum_\mu^M T_{m\mu} T_{n\mu} \ , \quad T_{m\mu} = \int \psi_{mI} E_{\mu II} dx$$

where $\quad$ are the coupling integrals between the modes of the first and second

waveguides $\quad \varphi_{mn} = (\beta_m - \beta_n)z \ \text{and} \ \tau_{mn} = \left( \dfrac{z}{V_m} - \dfrac{z}{V_n} \right)$ is the mode group delay between the modes $m$ and $n$, $G(\Omega)$ is the spectral density of the light source. Hermite-Gauss and Laguerre-Gauss functions are the modes for graded-index planar waveguide and cylindrical fiber, accordingly.

The variance of coupling efficiency (modal noise) has the form:

$$(3) \qquad \sigma^2(\eta) = \frac{1}{\sum_m |a_m|^2} \sum \sum \Gamma(\tau_{mn}) \left| \langle a_m a_n^* \rangle \right|^2 (F_{mn})^2$$

where the temporal coherence function $\Gamma(\tau_{mn})$ is determined by the group delays between the modes and the temporal coherence of the source, the values $\langle a_m a_n^* \rangle$ are determined by the spatial coherence of the source, the terms $F_{mn}$ are characterized by the geometry of a system.

Noise will be reduced if temporal coherence is decreased; spatial coherence is decreased and/or $F_{mn}$ is decreased, i.e. perfect matching is achieved. Perfect matching is achieved when the reflection coefficient R is equal to zero. Perfect matching means that a coupler does not cause the redistribution of energy between the modes of jointed fibers.

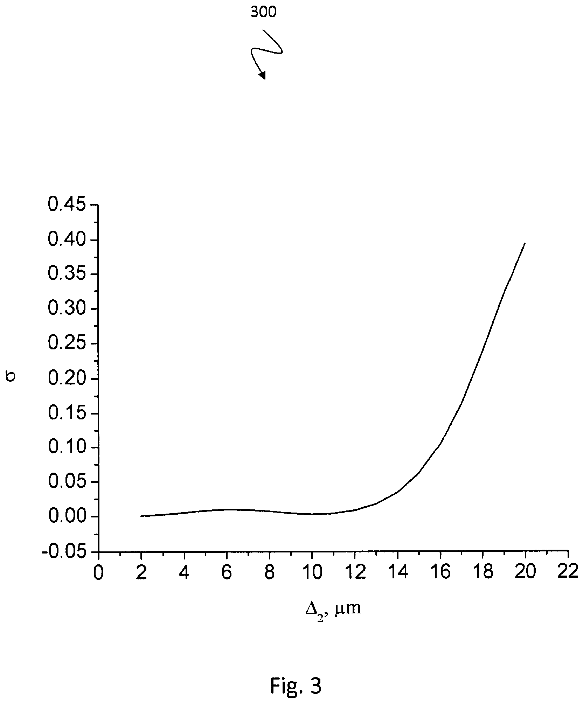

Fig. 3 shows an exemplary performance diagram illustrating noise as a function of lateral offset between laser source and fiber axis. The fiber axis refers to the center axis of the fiber, i.e. the optical axis 202 as depicted in Fig. 2. Noise $\sigma$ may be determined according to equation (3) as described above with respect to Fig. 2. Noise becomes noticeable at $\Delta > 15 \ \mu m$.

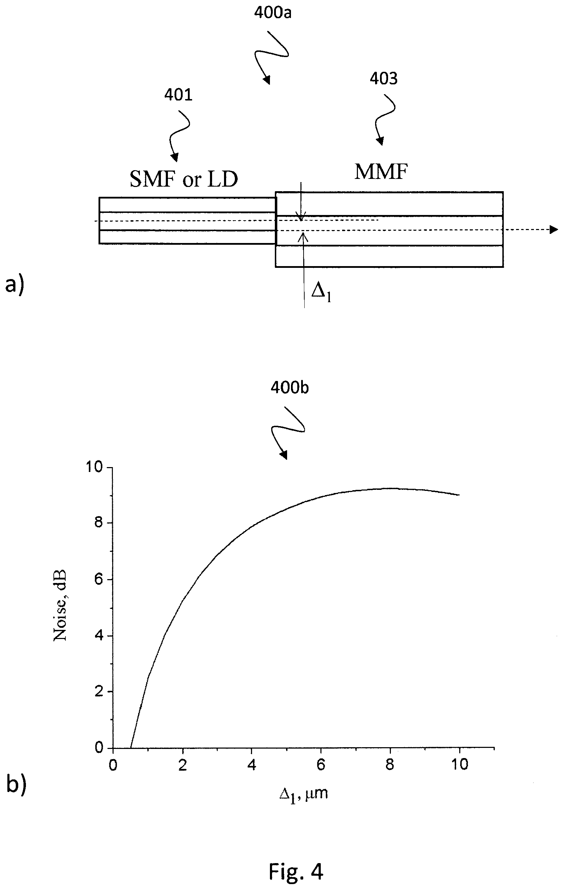

Fig. 4a shows a schematic diagram illustrating a displaced coupling point 400a between an SMF or LD waveguide 401 and an MMF waveguide 403. The optical axis of the first waveguide (SMF or LD) 401 is laterally displaced by a length of $\Delta_1$ versus the optical axis of the second waveguide (MMF) 403.

Fig. 4b shows an exemplary diagram 400b illustrating noise over a displacement length $\Delta_1$ for the displaced coupling point depicted in Fig. 4a.

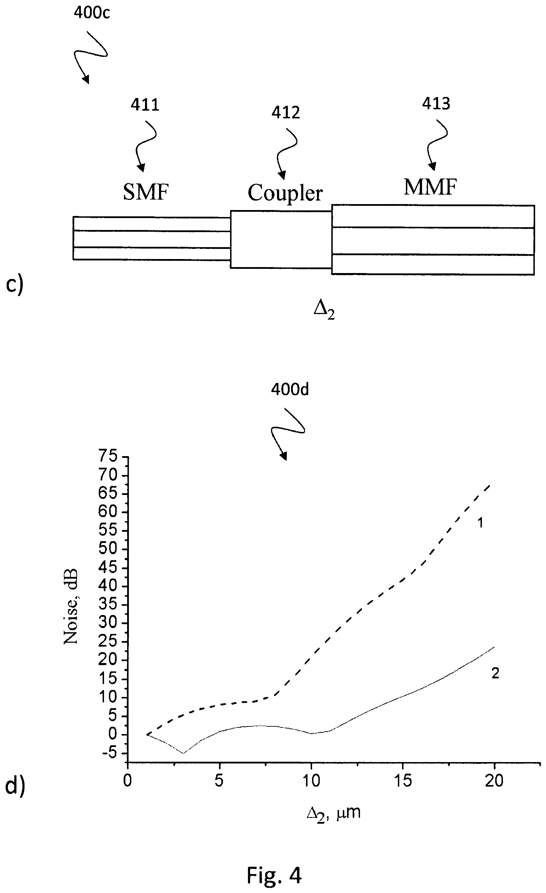

Fig. 4c shows a schematic diagram illustrating a displaced coupling point 400c between an SMF waveguide 411 and an MMF waveguide 413 by using an optical coupler 412 according to an implementation form. The optical axis of the SMF waveguide 411 is laterally displaced by a length of $\Delta_2$ versus the optical axis of the MMF waveguide (MMF) 413. The optical coupler 412 is positioned between the SMF waveguide 411 and the MMF waveguide 413 for compensating for the displacement.

Fig. 4d shows an exemplary diagram illustrating noise over a displacement length $\Delta_2$ for the displaced coupling point depicted in Fig. 4c. Curve 1 illustrates the noise without matching the displacement by the coupler 412, curve 2 illustrates the noise with matching the displacement by the coupler 412.

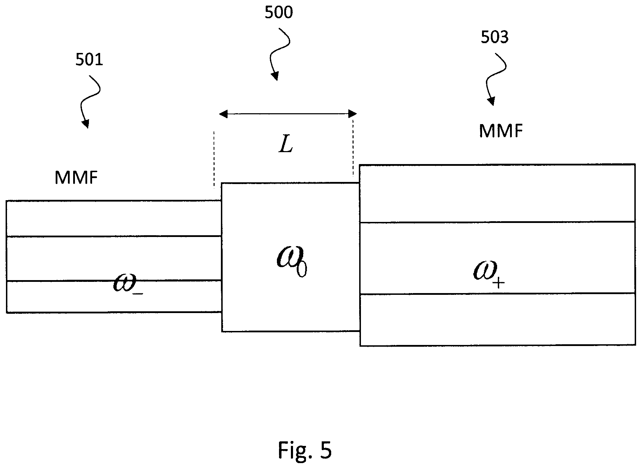

Fig. 5 shows a schematic diagram illustrating an optical coupler 500 between a first optical waveguide and a second optical waveguide according to a first specific embodiment.

The optical coupler 500 is connectable between the first optical waveguide 501, e.g. an MMF waveguide and the second optical waveguide 503, e.g. an MMF waveguide for coupling modulated light guided by the first optical waveguide 501 into multiple modes of the second optical waveguide 503. The optical coupler 500 includes a graded-index waveguide including a core material orientated with respect to an optical axis of the optical coupler 500. The core material has a refractive index decreasing with increasing distance from the optical axis of the optical coupler 500. A refractive index profile of the core material is designed in accordance to an optimality criterion with respect to conversion of the modulated light of the first waveguide 501 into the multiple modes of the second waveguide 503, such that an energy coupling between modes of the first optical waveguide 501 and the second optical waveguide 503 which modes have different indices is eliminated, e.g. as described below.

The coupler 500 with the length $L$ is mounted between the output surface of the first multimode graded-index fiber 501 with the gradient parameter $\omega_-$ and the input of the second multimode graded-index fiber 503 with the gradient parameter $\omega_+$. In order to provide the perfect matching the gradient parameter $\omega_0$ of the coupler 500 (graded-index optical waveguide) may be defined as

$$\omega_0 = \sqrt{\omega_- \omega_+} \ , \ 0 \leq z \leq L, \ L = \frac{\pi}{2} \frac{n_0}{\omega_0} (2p+1), \quad p = 0,1,2,...$$

where $\omega(z) = \omega_-$ for z<0 and $\omega(z) = \omega_+$ for z>L.

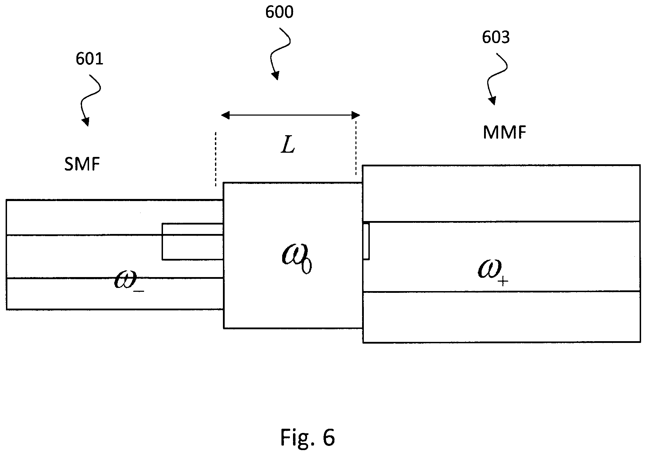

Fig. 6 shows a schematic diagram illustrating an optical coupler 600 between a first optical waveguide and a second optical waveguide according to a second specific embodiment.

The optical coupler 600 is connectable between the first optical waveguide 601, e.g. an SMF waveguide and the second optical waveguide 603, e.g. an MMF waveguide for coupling modulated light guided by the first optical waveguide 601 into multiple modes of the second optical waveguide 603. The optical coupler 600 includes a graded-index waveguide including a core material orientated with respect to an optical axis of the optical coupler 600. The core material has a refractive index decreasing with increasing distance from the optical axis of the optical coupler 600. A refractive index profile of the core material is designed in accordance to an optimality criterion with respect to conversion of the modulated light of the first waveguide 601 into the multiple modes of the second waveguide 603, such that an energy coupling between modes of the first optical waveguide 601 and the second optical waveguide 603 which modes have different indices is eliminated, e.g. as described below.

The optical coupler 600 differs from the coupler 500 described above with respect to Fig. 5 in that the first optical fiber 601 is a single-mode graded-index fiber. This indicates that the output beam from the first fiber 601 is a fundamental mode.

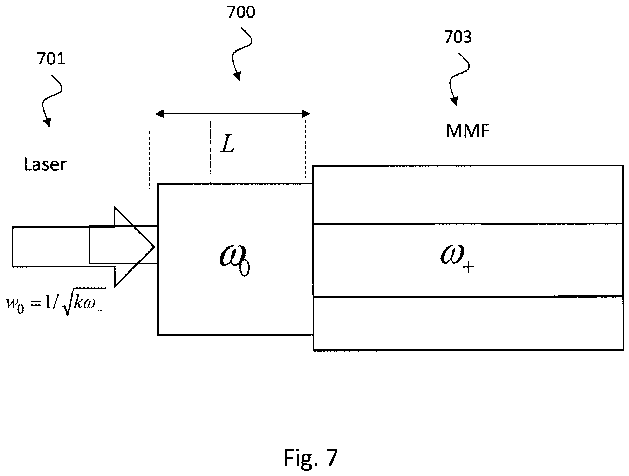

Fig. 7 shows a schematic diagram illustrating an optical coupler 700 between a first optical waveguide and a second optical waveguide according to a third specific embodiment.

The optical coupler 700 is connectable between the first optical waveguide 701, e.g. a laser diode and the second optical waveguide 703, e.g. an MMF waveguide for coupling modulated light guided by the first optical waveguide 701 into multiple modes of the second optical waveguide 703. The optical coupler 700 includes a graded-index waveguide including a core material orientated with respect to an optical axis of the optical coupler 700. The core material has a refractive index decreasing with increasing distance from the optical axis of the optical coupler 700. A refractive index profile of the core material is designed in accordance to an optimality criterion with respect to conversion of the modulated light of the first waveguide 701 into the multiple modes of the second waveguide 703, such that an energy coupling between modes of the first optical waveguide 701 and the second optical waveguide 703 which modes have different indices is eliminated, e.g. as described below.

The laser diode 701 emits light with a beam width $w_0 = 1/\sqrt{k\omega_-}$ , where $k = 2\pi/\lambda$ is the wavenumber and $\lambda$ is the light wavelength. When the optical coupler 700 is designed such that perfect matching is reached, total incident power of the laser source 701 will be launched into the multimode graded-index fiber 703.

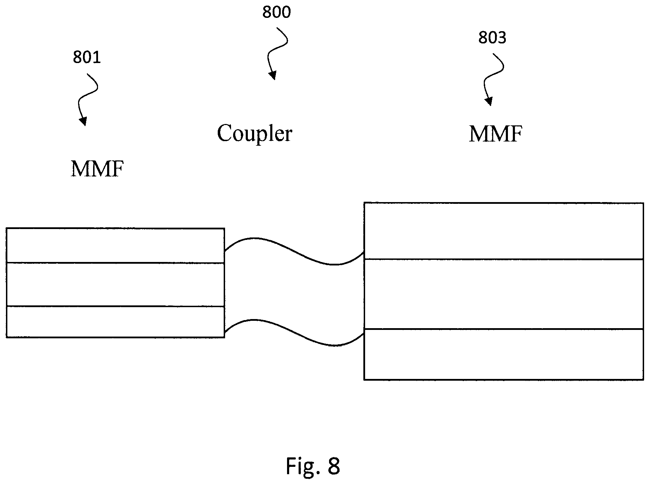

Fig. 8 shows a schematic diagram illustrating an optical coupler 800 between a first optical waveguide 801, e.g. an MMF waveguide and a second optical waveguide 803, e.g. an MMF waveguide, wherein a gradient parameter of the coupler 800 depends on a longitudinal coordinate according to a fourth specific embodiment.

The optical coupler 800 is connectable between the first optical waveguide 801 and the second optical waveguide 803 for coupling modulated light guided by the first optical waveguide 801 into multiple modes of the second optical waveguide 803. The optical coupler 800 includes a graded-index waveguide including a core material orientated with respect to an optical axis of the optical coupler 800. The core material has a refractive index decreasing with increasing distance from the optical axis of the optical coupler 800. A refractive index profile of the core material is designed in accordance to an optimality criterion with respect to conversion of the modulated light of the first waveguide 801 into the multiple modes of the second waveguide 803, such that an energy coupling between modes of the first optical waveguide 801 and the second optical waveguide 803 which modes have different indices is eliminated, e.g. as described below.

The gradient parameter of the coupler 800 may depend on the longitudinal coordinate $z$. A predicted coupling efficiency (0 < R <1) between the fibers 801, 803 may be achieved (parametric excitation of modes), if the gradient parameter is determined by $\omega^2(z) = \omega_-^2 \left\{1 + 2a\sin(2+b)\omega_- z / n_0\right\}$; $|a|,|b| \ll 1$, where $\omega_-$ is the gradient parameter of the first fiber 801, $z$ is a length of the coupler 800, $a$ and $b$ are constant parameters (e.g., real numbers), and $n_0$ is a refractive index on the optical axis.

In such a waveguide the reflection coefficient $R$ is determined according to the relations:

$$R = a^2 sh^2 \mu\omega_- z /(4\mu^2 + a^2 sh^2 \mu\omega_- z) \quad if \ | a | > | b |, \quad \mu = 0.5\sqrt{| a^2 - b^2 |}$$

and

$$R = a^2 \sin^2 \mu\omega_- z /(4\mu^2 + a^2 \sin^2 \mu\omega_- z) \quad if \ | a | < | b |,$$

wherein *sh* is the hyperbolic sine function (i.e., sinh).

In one example, a predictable coupling efficiency for the coupling of the modulated light of the first waveguide into the multiple modes of the second waveguide is achieved by the gradient parameter of the refractive index profile designed according to: $\omega^2(z) = \omega_-^2 + c_1 /(ch^2 c_2 z)$, wherein $\omega_-$ is the gradient parameter of the first waveguide, $z$ is the length of the optical coupler 800, $c$ is a constant parameter (e.g., a real number), and *ch* is the hyperbolic cosine function (i.e., cosh).

By choosing different values of $R$ different degree of mode mixing in the optical coupler 800 can be achieved, which causes the reduction of modal noise in the output of the second optical fiber 803.

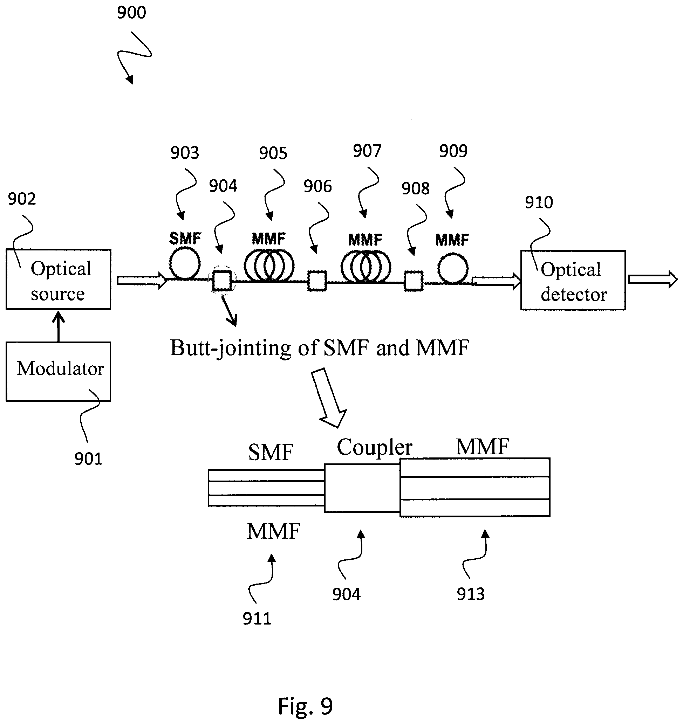

Fig. 9 shows a schematic diagram illustrating a multimode fiber optic link 900 according to an implementation form.

An optical source 902, e.g. a distributed feedback laser diode is directly modulated by the modulator 901 to provide an optical signal transmitted over the optic link 900. At the output of the optic link 900 the received optical power is directly detected by an optical detector 910, e.g. a photo-receiver. The optic link 900 includes a single mode fiber SMF 903 coupled to a plurality of multi-mode fibers MMF 905, 907, 909 by respective optical couplers 904, 906, 908. In an exemplary embodiment (not depicted in Fig. 9), the optical detector 910 is directly placed after the first multi-mode fiber 905. A first optical coupler 904 is exemplary depicted in Fig. 9.

The first optical coupler 904 is connectable between the first optical waveguide 911, e.g. an SMF or a MMF fiber and the second optical waveguide 913, e.g. an MMF waveguide for coupling modulated light guided by the first optical waveguide 911 into multiple modes of the second optical waveguide 913. The first optical coupler 904 includes a graded-index waveguide including a core material orientated with respect to an optical axis of the first optical coupler 904. The core material has a refractive index decreasing with increasing distance from the optical axis of the first optical coupler 904. A refractive index profile of the core material is designed in accordance to an optimality criterion with respect to conversion of the modulated light of the first waveguide 911 into the multiple modes of the second waveguide 913, such that an energy coupling between modes of the first optical waveguide 911 and the second optical waveguide 911 which modes have different indices is eliminated, e.g. as described above with respect to Figures 5 to 8. The first optical coupler 904 may correspond to one of the optical couplers 500, 600, 700, 800 as described above with respect to Figures 5 to 8.

Similarly, the further optical couplers 906, 908 may correspond to one of the optical couplers 500, 600, 700, 800 as described above with respect to Figures 5 to 8.

The multimode fiber optic link 900 represents an optical fiber data transmission system with reduced modal noise, including: a light source 902, launching modulated light into a first optical fiber 903; an optical coupler 904 placed between the first optical fiber 903 and a second optical fiber 905, wherein modulated light launched into the first optical fiber 903 is converted into modes of the second optical fiber 905; and an optical detector 910 for detecting modulated light propagated through the second optical fiber 905.

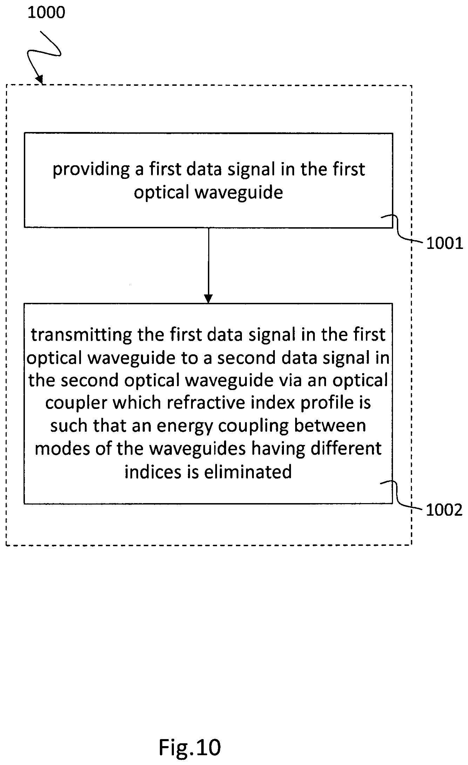

Fig. 10 shows a schematic diagram illustrating a method 1000 for transmitting a first data signal transported by a first optical waveguide to a second data signal transported by a second optical waveguide according to an implementation form.

The method 1000 includes providing 1001 the first data signal in the first optical waveguide, wherein the first data signal is based on launched modulated light in the first optical waveguide; and transmitting 1002 the first data signal in the first optical waveguide to a second data signal in the second optical waveguide by coupling the modulated light of the first optical waveguide into multiple modes of the second optical waveguide via an optical coupler. The optical coupler may correspond to one of the optical couplers 500, 600, 700, 800 as described above with respect to Figures 5 to 8.

A method for reducing modal noise in an optical fiber data transmission system, e.g. an optic link 900 as described above with respect to Fig. 9 includes the following steps: transmitting an output signal of the first optical fiber to an input signal of the second optical fiber by using the optical coupler, wherein the refractive index profile of the optical coupler is designed to provide perfect mode matching of the modulated light of the first optical waveguide into the multiple modes of the second optical waveguide; and transmitting an output signal of the second optical fiber to an optical receiver.

The present disclosure also supports a computer program product including computer executable code or computer executable instructions that, when executed, causes at least one computer to execute the performing and computing steps described herein, in particular the methods as described above with respect to Fig. 10. Such a computer program product may include a readable storage medium storing program code thereon for use by a computer. The program code may perform the methods as described above with respect to Fig. 10.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims, the invention may be practiced otherwise than as specifically described herein.

## Claims

1. An optical coupler (200, 500, 600, 700, 800) connectable between a first optical waveguide (201) and a second optical waveguide (203) for coupling modulated light guided by the first optical waveguide (201) into multiple modes of the second optical waveguide (203), the optical coupler comprising:

   a graded-index waveguide comprising a core material orientated with respect to an optical axis of the optical coupler, the core material having a refractive index decreasing with increasing distance from the optical axis of the optical coupler,
   wherein a refractive index profile of the core material is designed in accordance to an optimality criterion with respect to conversion of the modulated light of the first waveguide into the multiple modes of the second waveguide, such that an energy coupling between modes of the first optical waveguide and the second optical waveguide which modes have different indices is eliminated;
   wherein the refractive index profile of the core material is designed to provide perfect mode matching of the modulated light of the first waveguide into the multiple modes of the second waveguide; wherein the perfect mode matching means that the optical coupler does not cause a redistribution of energy between the modes of the first optical waveguide and the second optical waveguide; the first optical waveguide is one of the following: a multi-mode graded index fiber, single-mode fiber, a laser diode;
   **characterized in that**:

   the second optical waveguide is a multi-mode graded index fiber; and
   wherein the first optical waveguide has a first gradient parameter and the second optical waveguide has a second gradient parameter; and
   wherein a gradient parameter of the refractive index profile corresponds to a geometric mean of the first gradient parameter of the first optical waveguide and the second gradient parameter of the second optical waveguide, in particular according to the relation: $\omega_0 = \sqrt{\omega_- \omega_+}$ , where $\omega_0$ denotes the gradient parameter of the refractive index profile, $\omega_-$ denotes the first gradient parameter of the first optical waveguide and $\omega_+$ denotes the second gradient parameter of the second optical waveguide; and

wherein a length of the graded-index waveguide depends on the gradient parameter of the refractive index profile, in particular according to the relation:

$$ L = \frac{\pi}{2} \frac{n_0}{\omega_0} (2p+1), \quad p = 0,1,2,... \; , $$

where $\omega_0$ is the gradient parameter of the refractive index profile and $n_0$ is a refractive index on the optical axis.

**2.** The optical coupler (200, 500, 600, 700, 800) of claim 1,
wherein the refractive index profile of the core material is designed to provide a predetermined coupling efficiency for the coupling of the modulated light of the first waveguide into the multiple modes of the second waveguide.

**3.** The optical coupler (600) of one of claims 1 or 2,
wherein the first optical waveguide is a single-mode graded index fiber and wherein the modulated light guided by the first optical waveguide is a fundamental mode.

**4.** An optical fiber data transmission system (900) with reduced modal noise, comprising:

a light source (902), launching modulated light into a first optical fiber (903);
an optical coupler (904) according to any one of claims 1 or 2, the optical coupler placed between the first optical fiber (903) and a second optical fiber (905), wherein modulated light launched into the first optical fiber is converted into modes of the second optical fiber; and
an optical detector (910) for detecting modulated light propagated through the second optical fiber;
wherein the refractive index profile of the core material is designed to provide perfect mode matching of the modulated light of the first waveguide into the multiple modes of the second waveguide; wherein perfect matching means that the optical coupler does not cause a redistribution of energy between the modes of the first optical fiber and the second optical fiber.

**5.** A method for transmitting a first data signal transported by a first optical waveguide to a second data signal transported by a second optical waveguide, the method comprising:

providing the first data signal in the first optical waveguide, wherein the first data signal is based on launched modulated light in the first optical waveguide;
transmitting the first data signal in the first optical waveguide to a second data signal in the second optical waveguide by coupling the modulated light of the first optical waveguide into multiple modes of the second optical waveguide via an optical coupler,
wherein the optical coupler comprises:

a graded-index waveguide comprising a core material orientated with respect to an optical axis of the optical coupler, the core material having a refractive index decreasing with increasing distance from the optical axis of the optical coupler,
wherein a refractive index profile of the core material is designed in accordance to an optimality criterion with respect to conversion of the modulated light of the first waveguide into the multiple modes of the second waveguide, such that an energy coupling between modes of the first optical waveguide and the second optical waveguide which modes have different indices is eliminated;
wherein the refractive index profile of the core material is designed to provide perfect mode matching of the modulated light of the first waveguide into the multiple modes of the second waveguide; wherein perfect matching means that the optical coupler does not cause a redistribution of energy between the modes of the first optical waveguide and the second optical waveguide; the first optical waveguide is one of the following: a multi-mode graded index fiber, a single-mode fiber, a laser diode;
**characterized in that**

the second optical waveguide is a multi-mode graded index fiber; and
wherein the first optical waveguide has a first gradient parameter and the second optical waveguide has a second gradient parameter; and
wherein a gradient parameter of the refractive index profile corresponds to a geometric mean of the first gradient parameter of the first optical waveguide and the second gradient parameter of the second optical waveguide, in particular according to the relation: $\omega_0 = \sqrt{\omega_- \omega_+}$ , where $\omega_0$ denotes the gradient parameter of the refractive index profile, $\omega_-$ denotes the first gradient parameter of the first optical waveguide and $\omega_+$ denotes the second gradient parameter of the second optical waveguide; and
wherein a length of the graded-index waveguide depends on the gradient parameter of the refractive index profile, in particular according to the relation:

$$L = \frac{\pi}{2}\frac{n_0}{\omega_0}(2p+1), \quad p = 0,1,2,\dots ,$$

where $\omega_0$ is the gradient parameter of the refractive index profile and $n_0$ is a refractive index on the optical axis.

**Patentansprüche**

1. Optischer Koppler (200, 500, 600, 700, 800), der zwischen einem ersten optischen Wellenleiter (201) und einem zweiten optischen Wellenleiter (203) verbindbar ist, um moduliertes Licht, das durch den ersten optischen Wellenleiter (201) geleitet wird, in mehrere Modi des zweiten optischen Wellenleiters (203) zu koppeln, wobei der optische Koppler Folgendes umfasst:

   einen Wellenleiter mit Gradientenindex, der ein Kernmaterial umfasst, das in Bezug auf eine optische Achse des optischen Kopplers ausgerichtet ist, wobei das Kernmaterial einen Brechungsindex aufweist, der mit zunehmendem Abstand zu der optischen Achse des optischen Kopplers abnimmt,
   wobei ein Brechungsindexprofil des Kernmaterials gemäß einem Optimalitätskriterium in Bezug auf Umwandlung des modulierten Lichtes des ersten Wellenleiters in die mehreren Modi des zweiten Wellenleiters gestaltet ist, sodass eine Energiekopplung zwischen Modi des ersten optischen Wellenleiters und des zweiten optischen Wellenleiters, wobei die Modi unterschiedliche Indizes aufweisen, eliminiert wird;
   wobei das Brechungsindexprofil des Kernmaterials gestaltet ist, um perfekte Modusübereinstimmung des modulierten Lichtes des ersten Wellenleiters in die mehreren Modi des zweiten Wellenleiters bereitzustellen; wobei die perfekte Modusübereinstimmung bedeutet, dass der optische Koppler keine Umverteilung von Energie zwischen den Modi des ersten optischen Wellenleiters und des zweiten optischen Wellenleiters bewirkt; wobei der erste optische Wellenleiter einer der Folgenden ist: eine Faser mit Gradientenindex und mehreren Modi, eine Einzelmodusfaser, eine Laserdiode;
   **dadurch gekennzeichnet, dass**:

   der zweite optische Wellenleiter eine Faser mit Gradientenindex und mehreren Modi ist; und
   wobei der erste optische Wellenleiter einen ersten Gradientenparameter aufweist und der zweite optische Wellenleiter einen zweiten Gradientenparameter aufweist; und
   wobei ein Gradientenparameter des Brechungsindexprofils einem geometrischen Mittel des ersten Gradientenparameters des ersten optischen Wellenleiters und des zweiten Gradientenparameters des zweiten optischen Wellenleiters entspricht, insbesondere gemäß der Beziehung: $\omega_0 = \sqrt{\omega_- \omega_+}$ , wobei $\omega_0$ den Gradientenparameter des Brechungsindexprofils darstellt, $\omega_-$ den ersten Gradientenparameter des ersten optischen Wellenleiters darstellt und $\omega_+$ den zweiten Gradientenparameter des zweiten optischen Wellenleiters darstellt; und
   wobei eine Länge des Wellenleiters mit Gradientenindex von dem Gradientenparameter des Brechungsindexprofils abhängt, insbesondere gemäß der Beziehung:

$$L = \frac{\pi}{2}\frac{n_0}{\omega_0}(2p+1), \quad p = 0,1,2,\dots ,$$

wobei $\omega_0$ der Gradientenparameter des Brechungsindexprofils ist und $n_0$ ein Brechungsindex auf der optischen Achse ist.

2. Optischer Koppler (200, 500, 600, 700, 800) nach Anspruch 1,
   wobei das Brechungsindexprofil des Kernmaterials gestaltet ist, um eine vorbestimmte Kopplungseffizienz für die Kopplung des modulierten Lichtes des ersten Wellenleiters in die mehreren Modi des zweiten Wellenleiters bereitzustellen.

3. Optischer Koppler (600) nach einem der Ansprüche 1 oder 2,
   wobei der erste optische Wellenleiter eine Einzelmodusfaser mit Gradientenindex ist und wobei das modulierte Licht, das durch den ersten optischen Wellenleiter geleitet wird, ein Fundamentalmodus ist.

4. Optisches Faserdatenübertragungssystem (900) mit reduziertem modalen Rauschen, umfassend:

   eine Lichtquelle (902), die moduliertes Licht in eine erste optische Faser (903) ausgibt;
   einen optischen Koppler (904) nach einem der Ansprüche 1 oder 2, wobei der optische Koppler zwischen der ersten optischen Faser (903) und einer zweiten optischen Faser (905) platziert ist, wobei moduliertes Licht, das in die erste optische Faser ausgegeben wird, in Modi der zweiten optischen Faser umgewandelt wird; und
   einen optischen Detektor (910) zum Erfassen von moduliertem Licht, das durch die zweite optische Faser propagiert wird; wobei das Brechungsindexprofil des Kernmaterials gestaltet ist, um perfekte Modusübereinstimmung des modulierten Lichtes des ersten Wellenleiters in die mehreren Modi des zweiten Wellenleiters bereitzustellen; wobei perfekte Übereinstimmung bedeutet, dass der optische Koppler keine Umverteilung von Energie zwischen den Modi der ersten optischen Faser und der zweiten optischen Faser bewirkt.

5. Verfahren zum Übertragen eines ersten Datensignals, das durch einen ersten optischen Wellenleiter transportiert wird, auf ein zweites Datensignal, das durch einen zweiten optischen Wellenleiter transportiert wird, wobei das Verfahren Folgendes umfasst:

   Bereitstellen des ersten Datensignals in dem ersten optischen Wellenleiter, wobei das erste Datensignal auf ausgegebenem modulierten Licht in dem ersten optischen Wellenleiter basiert;
   Übertragen des ersten Datensignals in dem ersten optischen Wellenleiter auf ein zweites Datensignal in dem zweiten optischen Wellenleiter, indem das modulierte Licht des ersten optischen Wellenleiters über einen optischen Koppler in mehrere Modi des zweiten optischen Wellenleiters gekoppelt wird,
   wobei der optische Koppler Folgendes umfasst:

   einen Wellenleiter mit Gradientenindex, der ein Kernmaterial umfasst, das in Bezug auf eine optische Achse des optischen Kopplers ausgerichtet ist, wobei das Kernmaterial einen Brechungsindex aufweist, der mit zunehmendem Abstand zu der optischen Achse des optischen Kopplers abnimmt,
   wobei ein Brechungsindexprofil des Kernmaterials gemäß einem Optimalitätskriterium in Bezug auf Umwandlung des modulierten Lichtes des ersten Wellenleiters in die mehreren Modi des zweiten Wellenleiters gestaltet ist, sodass eine Energiekopplung zwischen Modi des ersten optischen Wellenleiters und des zweiten optischen Wellenleiters, wobei die Modi unterschiedliche Indizes aufweisen, eliminiert wird;
   wobei das Brechungsindexprofil des Kernmaterials gestaltet ist, um perfekte Modusübereinstimmung des modulierten Lichtes des ersten Wellenleiters in die mehreren Modi des zweiten Wellenleiters bereitzustellen;
   wobei perfekte Übereinstimmung bedeutet, dass der optische Koppler keine Umverteilung von Energie zwischen den Modi des ersten optischen Wellenleiters und des zweiten optischen Wellenleiters bewirkt;
   wobei der erste optische Wellenleiter einer der Folgenden ist: eine Faser mit Gradientenindex und mehreren Modi, eine Einzelmodusfaser, eine Laserdiode;
   **dadurch gekennzeichnet ist, dass**
   der zweite optische Wellenleiter eine Faser mit Gradientenindex und mehreren Modi ist; und
   wobei der erste optische Wellenleiter einen ersten Gradientenparameter aufweist und der zweite optische Wellenleiter einen zweiten Gradientenparameter aufweist;
   und
   wobei ein Gradientenparameter des Brechungsindexprofils einem geometrischen Mittel des ersten Gradientenparameters des ersten optischen Wellenleiters und des zweiten Gradientenparameters des zweiten optischen Wellenleiters entspricht, insbesondere gemäß der Beziehung: $\omega_0 = \sqrt{\omega_- \omega_+}$, wobei $\omega_0$ den

Gradientenparameter des Brechungsindexprofils darstellt, $\omega_-$ den ersten Gradientenparameter des ersten optischen Wellenleiters darstellt und $\omega_+$ den zweiten Gradientenparameter des zweiten optischen Wellenleiters darstellt; und

wobei eine Länge des Wellenleiters mit Gradientenindex von dem Gradientenparameter des Brechungsindexprofils abhängt, insbesondere gemäß der Beziehung:

$$L = \frac{\pi}{2}\frac{n_0}{\omega_0}(2p+1), \quad p = 0,1,2,\ldots$$

,

wobei $\omega_0$ der Gradientenparameter des Brechungsindexprofils ist und $n_0$ ein Brechungsindex auf der optischen Achse ist.

## Revendications

1. Coupleur optique (200, 500, 600, 700, 800) pouvant être relié entre un premier guide d'ondes optique (201) et un second guide d'ondes optique (203) pour coupler une lumière modulée guidée par le premier guide d'ondes optique (201) dans de multiples modes du second guide d'ondes optique (203), le coupleur optique comprenant :

un guide d'ondes à gradient d'indice comprenant un matériau de noyau orienté par rapport à un axe optique du coupleur optique, le matériau de noyau ayant un indice de réfraction diminuant avec l'augmentation de la distance par rapport à l'axe optique du coupleur optique,
dans lequel un profil d'indice de réfraction du matériau de noyau est conçu en fonction d'un critère d'optimalité par rapport à la conversion de la lumière modulée du premier guide d'ondes dans de multiples modes du second guide d'ondes, de sorte qu'un couplage d'énergie entre les modes du premier guide d'ondes optique et du second guide d'ondes optique, lesquels modes ont des indices différents, est éliminé ;
dans lequel le profil d'indice de réfraction du matériau de noyau est conçu pour fournir une correspondance de mode parfaite de la lumière modulée du premier guide d'ondes dans les multiples modes du second guide d'ondes ; dans lequel la correspondance de mode parfaite signifie que le coupleur optique ne provoque pas une redistribution d'énergie entre les modes du premier guide d'ondes optique et du second guide d'ondes optique ; le premier guide d'ondes optique est l'un des éléments suivants : une fibre multimode à gradient d'indice, une fibre monomode, une diode laser ;
**caractérisé en ce que** :

le second guide d'ondes optique est une fibre multimode à gradient d'indice ; et
dans lequel le premier guide d'ondes optique a un premier paramètre de gradient et le second guide d'ondes optique a un second paramètre de gradient ;
et
dans lequel un paramètre de gradient du profil d'indice de réfraction correspond à une moyenne géométrique du premier paramètre de gradient du premier guide d'ondes optique et du second paramètre de gradient du second guide d'ondes optique, en particulier selon la relation : $\omega_0 = \sqrt{\omega_-\omega_+}$ , où $\omega_0$ désigne le paramètre de gradient du profil d'indice de réfraction, $\omega_-$ désigne le premier paramètre de gradient du premier guide d'ondes optique et $\omega_+$ désigne le second paramètre de gradient du second guide d'ondes optique ; et
dans lequel une longueur du guide d'ondes à gradient d'indice dépend du paramètre de gradient du profil d'indice de réfraction, en particulier selon la relation :

$$L = \frac{\pi}{2}\frac{n_0}{\omega_0}(2p+1), \quad p = 0,1,2,\ldots$$

,

où $\omega_0$ est le paramètre de gradient du profil d'indice de réfraction et $n_0$ est un indice de réfraction sur l'axe optique.

**2.** Coupleur optique (200, 500, 600, 700, 800) selon la revendication 1,
dans lequel le profil d'indice de réfraction du matériau de noyau est conçu pour fournir une efficacité de couplage prédéterminée pour le couplage de la lumière modulée du premier guide d'ondes dans les multiples modes du second guide d'ondes.

**3.** Coupleur optique (600) selon l'une des revendications 1 ou 2,
dans lequel le premier guide d'ondes optique est une fibre monomode à gradient d'indice et dans lequel la lumière modulée guidée par le premier guide d'ondes optique est un mode fondamental.

**4.** Système de transmission de données de fibre optique (900) à bruit modal réduit, comprenant :

une source de lumière (902), émettant une lumière modulée dans une première fibre optique (903) ;
un coupleur optique (904) selon l'une quelconque des revendications 1 ou 2, le coupleur optique étant placé entre la première fibre optique (903) et une seconde fibre optique (905), dans lequel la lumière modulée émise dans la première fibre optique est convertie dans des modes de la seconde fibre optique ; et
un détecteur optique (910) pour détecter la lumière modulée se propageant à travers la seconde fibre optique ;
dans lequel le profil d'indice de réfraction du matériau de noyau est conçu pour fournir une correspondance de mode parfaite de la lumière modulée du premier guide d'ondes dans les multiples modes du second guide d'ondes ; dans lequel une correspondance parfaite signifie que le coupleur optique ne provoque pas une redistribution d'énergie entre les modes de la première fibre optique et de la seconde fibre optique.

**5.** Procédé de transmission d'un premier signal de données transporté par un premier guide d'ondes optique à un second signal de données transporté par un second guide d'ondes optique, le procédé comprenant :

la fourniture du premier signal de données dans le premier guide d'ondes optique, dans lequel le premier signal de données est basé sur la lumière modulée émise dans le premier guide d'ondes optique ;
la transmission du premier signal de données dans le premier guide d'ondes optique à un second signal de données dans le second guide d'ondes optique en couplant la lumière modulée du premier guide d'ondes optique dans de multiples modes du second guide d'ondes optiques par l'intermédiaire d'un coupleur optique, dans lequel le coupleur optique comprend :

un guide d'ondes à gradient d'indice comprenant un matériau de noyau orienté par rapport à un axe optique du coupleur optique, le matériau de noyau ayant un indice de réfraction diminuant avec l'augmentation de la distance par rapport à l'axe optique du coupleur optique,
dans lequel un profil d'indice de réfraction du matériau de noyau est conçu en fonction d'un critère d'optimalité par rapport à la conversion de la lumière modulée du premier guide d'ondes dans les multiples modes du second guide d'ondes, de sorte qu'un couplage d'énergie entre les modes du premier guide d'ondes optique et du second guide d'ondes optique, lesquels modes ont des indices différents, est éliminé ;
dans lequel le profil d'indice de réfraction du matériau de noyau est conçu pour fournir une correspondance de mode parfaite de la lumière modulée du premier guide d'ondes dans les multiples modes du second guide d'ondes ; dans lequel une correspondance parfaite signifie que le coupleur optique ne provoque pas une redistribution d'énergie entre les modes du premier guide d'ondes optique et du second guide d'ondes optique ; le premier guide d'ondes optique est l'un des éléments suivants : une fibre multimode à gradient d'indice, une fibre monomode, une diode laser ;
**caractérisé en ce que**
le second guide d'ondes optique est une fibre multimode à gradient d'indice ; et
dans lequel le premier guide d'ondes optique a un premier paramètre de gradient et le second guide d'ondes optique a un second paramètre de gradient ;
et
dans lequel un paramètre de gradient du profil d'indice de réfraction correspond à une moyenne géométrique du premier paramètre de gradient du premier guide d'ondes optique et du second paramètre de gradient du second guide d'ondes optique, en particulier selon la relation : $\omega_0 = \sqrt{\omega_- \omega_+}$ , où $\omega_0$ désigne le paramètre de gradient du profil d'indice de réfraction, $\omega_-$ désigne le premier paramètre de gradient du premier guide d'ondes optique et $\omega_+$ désigne le second paramètre de gradient du second guide d'ondes optique ; et
dans lequel une longueur du guide d'ondes à gradient d'indice dépend du paramètre de gradient du profil d'indice de réfraction, en particulier selon la relation :

$$L = \frac{\pi}{2}\frac{n_0}{\omega_0}(2p+1), \quad p = 0,1,2,\ldots$$

,

où $\omega_0$ est le paramètre de gradient du profil d'indice de réfraction et $n_0$ est un indice de réfraction sur l'axe optique.

$$L = \frac{\pi}{2}\frac{n_0}{\omega_0}(2p+1), \quad p = 0,1,2,\ldots$$

Fig. 1

200

203

201

$L$

MMF

SMF or MMF

202

$\omega_-$

$\omega_0$

$\omega_+$

Fig. 2

Fig. 3

Fig. 4

400c

411                    412                    413

SMF            Coupler            MMF

c)

$\Delta_2$

400d

d)

Fig. 4

Fig. 5

Fig. 6

Fig. 7

800

803

801

Coupler

MMF

MMF

Fig. 8

900

902

903    905    907    909

904    906    908    910

SMF    MMF    MMF    MMF

Optical
source

Modulator

901

Optical
detector

Butt-jointing of SMF and MMF

SMF    Coupler    MMF

MMF

911    904    913

Fig. 9

1000

providing a first data signal in the first
optical waveguide

— 1001

transmitting the first data signal in the first
optical waveguide to a second data signal in
the second optical waveguide via an optical
coupler which refractive index profile is
such that an energy coupling between
modes of the waveguides having different
indices is eliminated

— 1002

Fig.10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7340138 B
- US 20050265653 A